# EUROPÄISCHE PATENTANMELDUNG

(11) **EP 1 404 070 A2**
(43) Veröffentlichungstag der Anmeldung: **31.03.2004**
(21) Anmeldenummer: 03102636.2
(22) Anmeldetag: 22.08.2003
(51) Int. Cl.: H04L 12/56

(54) **Verfahren zur Suche von disjunkten Pfaden in einem Netzwerk**

(30) Priorität: 20.09.2002 DE 10243861
(71) Anmelder: SIEMENS AKTIENGESELLSCHAFT, 80333 München (DE)
(72) Erfinder: Stilling, Bernd, 81379 München (DE)

(57) **Zusammenfassung**

Die Erfindung betrifft ein Verfahren zur Suche von disjunkten Pfaden zur Signalübertragung in einem Netzwerk, die mittels mehrerer Verbindungsabschnitten mit zwischengeschalteten Netzknoten unterschiedliche Übertragungswege aus einem ersten Schaltknoten bis zu einem zweiten Schaltknoten bilden. Als erster Pfad wird gemäß einer Routeninformation eine erste Verbindung zwischen den beiden Schaltknoten über einige der Netzknoten erzeugt. Die Routeninformation enthält aller dem ersten Pfad (P1) zugeordneten Verbindungsabschnitten mit oder ohne entsprechenden angeschlossenen Netzknoten. Zur Suche eines disjunkten Pfades die Routeninformation wird aus dem ersten Schaltknoten weiteren Netzknoten bis zu dem zweiten Schaltknoten über einigen Verbindungsabschnitten mit einer "hop-by-hop"-Methode übertragen. Eine Route des ersten Pfades aus der Routeninformation enthält Randbedingungen gemäß der gewünschten Disjunktion der Pfade. Bei Erhalt und Speichern der disjunkten Pfade ist bei Bedarf eine einfache Schaltung der Schaltknoten ohne Schaltung der in Pfaden angeordneten Netzknoten möglich.

## Beschreibung

Die Erfindung betrifft ein Verfahren zur Suche von disjunkten Pfaden in einem Netzwerk nach dem Oberbegriff des Patentanspruches 1.

Herkömmliche optische Übertragungssysteme (OTN = Optical Transport Network) werden so konfiguriert, dass mehrere unterschiedliche oder sogenannte disjunkte Übertragungswege (OchL = Optical Channel Layer) z. B. für ein Wellenlängen-Multiplex-Signal mittels eines Telekommunikation Management Netzwerks (TMN = Telecommunication Management Network) gewählt werden. Aus US 5 577 030 ist ein Verfahren zur Bestimmung von disjunkten Pfaden zwischen einem Quellknoten und einem Zielknoten beschrieben, bei dem mittels einer Matrixberechnung bei einem Netzwerkmanagement die möglichen Pfade zwischen beiden Quell- und Zielknoten ermittelt werden. Aufgrund des hohen Rechnensaufwandes erfordert dieses Verfahren eine leistungsfähige Rechnerkapazität im Netzwerkmanagement.

Aus "Disjoint Paths in a Network", J. W. Suurballe, Bell Telephone Laboratories Inc., Networks 4, p. 125-145, 1974 ist ein Verfahren zur Suche von disjunkten Pfaden zwischen einem Quellknoten und einem Zielknoten bekannt, bei dem mittels einer Mehrzahl von Iterationen eines Algorithmus zur Minimierung der Übertragungswege bzw. der Kosten mehrere disjunkte Pfade bei einem Übertragungssystem gefunden werden. Eine weitere schnellere Methode nach diesem Prinzip ist in "A Quick Method for Finding Shortest Pairs of disjoint Paths", J. W. Suurballe, R. E. Tarjan, Bell Telephone Laboratories Inc., Networks 14, p. 325-336, 1984 beschrieben. Nach dieser Weise wird aus einem Netzwerkmanagement eine systembedingte Ermittlung von unterschiedlichen disjunkten Pfaden von einem Knoten bis zu einem anderen Knoten durchgeführt.

In EP 1 051 003 A1 ist eine Routenmethode für Signalpakete entlang Netzknoten zwischen einem Quellknoten und einem Zielknoten beschrieben, bei der eine Übertragung der Signalpakete schrittweise (hop-by-hop) zwischen den Netzknoten erfolgt. Dabei werden erst die Signalpakete entlang eines expliziten Pfads übertragen. Zum Routen der Signalpakete werden in einem Header der Signalpakete die Adressen der dem expliziten Pfad zugeordneten Netzknoten gespeichert. Weitere hop-by-hop-Umleitungspfade zwischen den Netzknoten im expliziten Pfad werden weiterhin unter Betrachtung von kürzesten Übertragungswegen mittels einer im Quellknoten angeordneten Einheit ermittelt. Die Adressen der neuen einem Umleitungspfad zugeordneten Netzknoten werden in dem Header der Signalpakete addiert. Bei einer weiteren Ausführung dieser Methode ist die Einheit in einem Netzwerkmanagement angeordnet.

Aufgabe der Erfindung ist es, ein Verfahren zur Suche von disjunkten Pfaden in einem Netzwerk anzugeben, das möglichst den Aufwand des Netzwerkmanagements minimiert sowie das Routen der Signale erleichtert.

Eine Lösung der Aufgabe erfolgt hinsichtlich ihres Verfahrensaspekts durch ein Verfahren mit den Merkmalen des Patentanspruchs 1.

Erfindungsgemäß wird eine lokale Suche von einem ersten Pfad disjunkter Pfade durchgeführt, bei der eine Routeninformation aus dem Quellknoten bis zum Endknoten entlang dem ersten Pfad generiert und dem Quellknoten zurückgeführt wird. Zur Suche eines weiteren Pfades wird dem Endknoten die Routeninformation durch Netzknoten bzw. entlang Verbindungsabschnitten, die andere Netzknoten bzw. Verbindungsabschnitten sind als die in der Routeninformation bisher registrierten Netzknoten bzw. Verbindungsabschnitten. Die Routeninformation wird bei Bedarf dementsprechend weiter aktualisiert, damit eventuelle weitere disjunkte Pfade gefunden werden.

Ein wesentlicher Vorteil des erfindungsgemäßen Verfahrens ist darin zu sehen, dass zuerst die Routeninformation lediglich die Übertragungseigenschaften als Registrierdaten oder Tabelle mit Netzknotennummern und Verbindungsabschnitten des ersten Pfads enthält. Bei einem weiteren Pfad werden in der Routeninformation die noch aus dem ersten Pfad verwendeten Übertragungseigenschaften beibehaltet, die umgeleiteten Übertragungseigenschaften gelöscht und die neuen Übertragungseigenschaften der Umleitung gespeichert. Die Routeninformation wird also einfach aktualisiert, daher ist kein Rechnens- bzw. wesentlicher Speicheraufwand erforderlich.

Besonders vorteilhaft ist die Verwendung des erfindungsgemäßen Verfahrens bei einem erweiterbaren oder unbekannten Netzwerk, da eine Kenntnis der Topologie des Netzwerks nicht notwendig ist.

In vorteilhafter Weise eignet sich das erfindungsgemäße Verfahren für optische transparente Netzwerke mit einer sehr hohen Kanalanzahl z. B. bei einem 80-Kanal-DWDM-Übertragungssystem. Weiterhin hängen die möglichen Pfade von den aktuellen verstellbaren Schaltungen an den Netzknoten ab, deshalb wird bei Umschaltungen ein zentrales Netzwerkmanagement im Gegensatz zu einer lokalen Methode mit zu hohen Rechenanforderungen bzw. zu langsamen Reaktionszeiten für eine geeignete Schaltung der Signale auf einem disjunkten Pfad verbunden.

Das Verfahren eignet sich für jede Art der Multiplex-Übertragung, d. h. ist von den Eigenschaften einer Signalkodierung (Wellenlänge, Polarisation, etc...) zur Erzeugung von Übertragungskanälen im Netzwerk unabhängig. Auch bei zukünftiger Entwicklung von Netzknoten für unterschiedliche Granularitäten der Kanäle kann das erfindungsgemäße Verfahren verwendet werden.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Fig. 1:: eine erste Darstellung von disjunkten Pfaden,
- Fig. 2:: eine zweite Darstellung von disjunkten Pfaden,
- Fig. 3:: eine dritte Darstellung von disjunkten Pfaden.

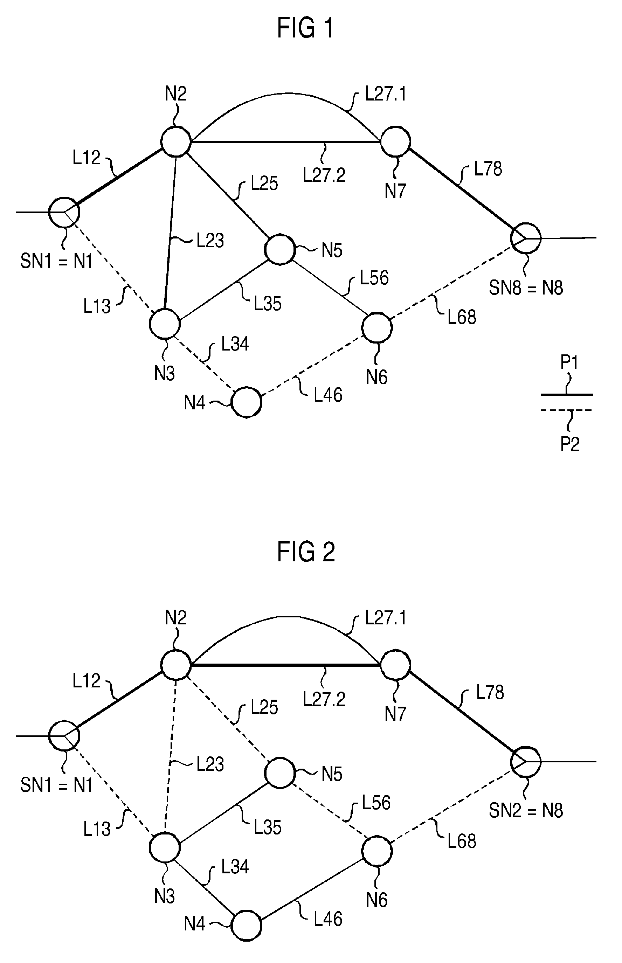

In **Fig. 1** ist ein Netzwerk zur Signalübertragung zwischen einem Schaltknoten SN1 als Quellknoten N1 und einem zweiten Schaltknoten SN2 als Zielknoten N8 dargestellt. Zwischen beiden Schaltknoten N1, N8 sind mehrere Verbindungsabschnitte L12, L13, L23, ... mit zwischengeschalteten Netzknoten N2, N3, ..., N7 geschaltet, die unterschiedliche Pfade bilden. Zwischen einiger der Netzknoten Ni, Nj bzw. SNi, Nj ist ein Verbindungsabschnitt Lij als eine physikalische Verbindung wie eine oder mehrere optische Faser geschaltet.
Dem Quellknoten SN1 = N1 sind mittels der Verbindungsabschnitte L12, L13 beide auch mit dem Verbindungsabschnitt L23 verbundenen Netzknoten N2, N3 geschaltet. Dem Netzknoten N2 sind mittels der Verbindungsabschnitte L25, L27.1, L27.2 beide Netzknoten N5, N7 geschaltet. Die Verbindungsabschnitte L27.1, L27.2 bilden eine doppelte Verbindung zwischen den Netzknoten N2, N7. Dem Netzknoten N5 sind mittels der Verbindungsabschnitte L53, L56 beide Netzknoten N3, N6 geschaltet. Den Netzknoten N3, N6 ist der Netzknoten N4 mittels der Verbindungsabschnitte L34, L46 zwischengeschaltet. Dem Zielknoten SN2 = N8 sind mittels der Verbindungsabschnitte L78, L68 beide Netzknoten N6, N7 geschaltet.

Der erste Pfad P1 ist mittels der Verbindungskomponente N1, L12, N2, L27.2, N7, L78, N8 als fettgedruckte Linie dargestellt. Der dem ersten Pfad P1 disjunkte Ersatzpfad P2 ist mittels der Verbindungskomponente
N1, L13, N3, L34, N4, L46, N6, L68, N8 als gestrichelte Linie dargestellt. Die fett- bzw. gestrichelte Darstellung der Pfade P1, P2 gilt für alle weitere Figuren. Zur Suche des Ersatzpfades P2 können bekannte Verfahren wie eine "shortest path first"-Methode verwendet werden.

Aus dem Schaltknoten SN1 ist eine Routeninformation erzeugt und dem nächsten Netzknoten N2 zugeführt. Diese enthält eine Tabelle mit Quelle SN1, Ziel SN8 und Route N1, L12. Bei Erhalt der Routeninformation in dem Netzknoten wird die Route gemäß dem ersten Pfad P1 mit den Komponenten
N1, L12, N2, L27.2 aktualisiert. Die Routeninformation ist bis zum Zielknoten SN2=N8 weiterhin abschnittsweise aktualisiert. Es folgt, dass am Zielknoten N8 die Routeninformation als Quelle SN1=N1 und als Ziel SN2=N8 und als Route die Komponente N1, L12, N2, L27.2, N7, L78 aufweist. Die Routeninformation wird an dem Schaltknoten SN1 zurückgeführt.

Die rückgesendeten Informationen aus der Routeninformation werden nun als Randbedingungen für die Bildung des disjunkten Ersatzpfades verwendet.

Diese Randbedingungen sind je nach Disjunktion prinzipiell in drei Kategorien zu trennen. Eine erste Kategorie ist in Fig. 1 dargestellt, wobei die disjunkten Pfade P1, P2 keine gemeinsamen Verbindungsabschnitte Lij und bis auf die beiden Endknoten SN1, SN2 auch keine gemeinsamen Netzknoten aufweisen.

Nach diesem Prinzip wird am Schaltknoten SN1 der erste dem Verbindungsabschnitt L12 unterschiedliche Verbindungsabschnitt L13 geschaltet und die aus dem Schaltknoten SN1 erhaltene Routeninformation dem Netzknoten N3 vermittelt. Die Route in der Routeninformation wird in jedem Netzknoten überprüft und einem weiteren Netzknoten mittels einer "hop-by-hop"-Methode vermittelt, solange bis sie am Endknoten N8 ankommt. Die Überprüfung dient dem Verbot einer Vermittlung der Routeninformation an dem ersten Pfad P1 gemeinsamen Verbindungsabschnitte L12, L27.2, L78 und Netzknoten N2, N7, die in der Route der Routeninformation gespeichert sind.

Beim Bedarf können auch interne Schaltungen der Netzknoten des Ersatzpfades P2 aktiviert werden, aber es sollte bei einer ersten "hop-by-hop"-Methode möglichst nicht vorkommen. Es wird erst versucht, lediglich die Schaltungen der Endknoten SN1, SN2 auszunutzen und die Schaltungen der anderen Netzknoten unverändert zu lassen.

In **Fig. 2** wird ein weiterer zu dem ersten Pfad P1 disjunkter Ersatzpfad P2 gemäß Fig. 1 dargestellt, bei dem als Randbedingung aus der Routeninformation lediglich die Verbindungsabschnitte des ersten Pfades P1 ausschlossen werden. Damit sind mehrere Ersatzpfade als in Fig. 1 möglich.
Bei der Vermittlung der Routeninformation entlang des ersten Pfades P1 werden nun lediglich die Verbindungsabschnitte L12, L27.2, L78 als Route der Routeninformation gespeicherten. Bei dem "hop-by-hop"-Aufbau des Ersatzpfades P2 werden diese Verbindungsabschnitte ausgeschlossen.

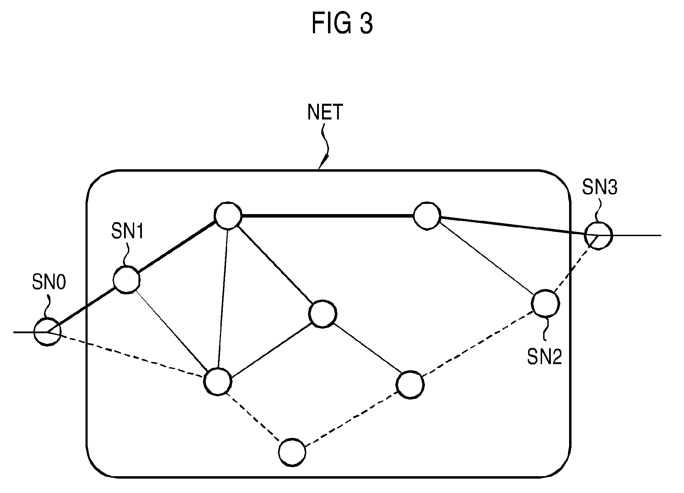

In **Fig. 3** wird ein weiterer dem ersten Pfad P1 disjunkter Ersatzpfad P2 mit einem Netzwerk NET gemäß Fig. 1 oder 2 dargestellt, bei dem als Randbedingung aus der Routeninformation weder die Verbindungsabschnitte noch gemeinsame Netzknoten und Schaltknoten des ersten Pfades P1 ausschlossen werden. --Um die Darstellung übersichtlich zu halten wurden nur Schaltknoten SN1, SN2 gemäß Fig. 1 oder 2 mit den nun nicht gekennzeichneten Verbindungsabschnitten Lij und Neztknoten N2 bis N7 dargestellt. Diese dritte Disjunktionskategorie wird bei notwendiger weiterer Schaltung von dem Netzwerk NET extern angeordneten Netz bzw. Schaltknoten SN0, SN3 wie z.B. bei einem anderen Provider als derjenige des Netzwerks NET verwendet. Dem Schaltknoten SN0 als neuer Quellknoten sind mindestens zwei Verbindungsabschnitte zum Netzwerk NET angeordnet, damit eine Schaltung möglich ist. Hier sind diese zwei Verbindungsabschnitte mit dem Schaltknoten SN1 und einem aus Fig. 1 oder 2 angeordneten Netzknoten Ni dargestellt. Dem Schaltknoten SN3 als neuer Zielknoten sind mindestens zwei Verbindungsabschnitte zum Netzwerk NET angeordnet, damit eine Schaltung erfolgt. Hier sind zwei Verbindungsabschnitte mit dem Schaltknoten SN2 und einem aus Fig. 1 oder 2 angeordneten Netzknoten Ni dargestellt.

Das Verfahren zur Suche des Ersatzpfades P2 mittels der Routeninformation erfolgt gemäß der oben verwendeten Methode aus Fig. 1 oder 2. Als Endknoten sind nun die Schaltknoten SN0 und SN3 anstelle von SN1, SN2 verwendet.

Es können ebenfalls weitere Ersatzpfade P3, P4 gemäß dem Ersatzpfad P2 gesucht und gespeichert werden, damit auf Kosten des Systemmanagements weitere Umschaltmöglichkeiten bei Bedarf zu Verfügung stehen.

## Patentansprüche

1. Verfahren zur Suche von disjunkten Pfaden (P1, P2, ...) zur Signalübertragung in einem Netzwerk, die mittels mehrerer Verbindungsabschnitten (L12, L13, L23, ...) mit zwischengeschalteten Netzknoten (N1, N2, N3, ...) unterschiedliche Übertragungswege aus einem ersten Schaltknoten (SN1) bis zu einem zweiten Schaltknoten (SN2) bilden, bei dem als erster Pfad (P1) gemäß einer Routeninformation eine erste Verbindung zwischen den beiden Schaltknoten (SN1, SN2) über einige der Netzknoten (N1, N2, N3, ...) erzeugt wird,
**dadurch gekennzeichnet**,
bei dem die Routeninformation als eine Registriertabelle aller dem ersten Pfad (P1) zugeordneten Verbindungsabschnitten (Lij) mit aller entsprechenden angeschlossenen Netzknoten (Ni, Nj) vorgesehen ist (i>0, j>0),
bei dem zur Suche eines weiteren dem ersten Pfad (P1) disjunkten Pfades (P2) die Routeninformation aus dem ersten Schaltknoten (SN1) einem ersten Netzknoten (Nk) mit k ≠ i, j bis zu dem zweiten Schaltknoten (SN2) über Verbindungsabschnitten (Lkm) mit k ≠ i, j oder m ≠ i, j übertragen wird.

2. Verfahren zur Suche von disjunkten Pfaden (P1, P2, ...) zur Signalübertragung in einem Netzwerk, die mittels mehrerer Verbindungsabschnitten (L12, L13, L23, ...) mit zwischengeschalteten Netzknoten (N1, N2, N3, ...) unterschiedliche Übertragungswege aus einem ersten Schaltknoten (SN1) bis zu einem zweiten Schaltknoten (SN2) bilden, bei dem als erster Pfad (P1) gemäß einer Routeninformation eine erste Verbindung zwischen den beiden Schaltknoten (SN1, SN2) über einige der Netzknoten (N1, N2, N3, ...) erzeugt wird,
**dadurch gekennzeichnet**,
bei dem die Routeninformation als eine Registriertabelle aller dem ersten Pfad (P1) zugeordneten Verbindungsabschnitten (Lij) vorgesehen ist (i>0, j>0),
bei dem zur Suche eines weiteren dem ersten Pfad (P1) disjunkten Pfades (P2) die Routeninformation aus dem ersten Schaltknoten (SN1) bis zu dem zweiten Schaltknoten (SN2) über weitere Verbindungsabschnitten (Lkm) mit k ≠ i, j oder m ≠ i, j übertragen wird.

3. Verfahren nach einem der Ansprüche 1 oder 2,
**dadurch gekennzeichnet**,
bei dem vor der Suche des disjunkten Pfades (P2) die Routeninformation aus dem zweiten Schaltknoten (SN2) an den ersten Schaltknoten (SN1) entlang dem ersten Pfad (P1) rückläufig vermittelt wird.

4. Verfahren nach einem der Ansprüche 3,
dass weitere disjunkte Pfade (P3, P4, ...) gemäß den Hin- und Rückdurchläufen der Routeninformation für die Pfade (P1, P2) gesucht werden.

5. Verfahren nach einem der vorhergehenden Ansprüche,
**dadurch gekennzeichnet,**
**dass** bei der Vermittlung der Routeninformation aus einem Schaltknoten oder einem Netzknoten bis zu einem weiteren Netzknoten bzw. einem Schaltknoten die Routeninformation mit neuen Registrierdaten abschnittweise aktualisiert wird, die ein Erkenntnis der durchgelaufenen Netzknoten und Verbindungsabschnitten des gesuchten disjunkten Pfades an jedem Ort Netzknoten bzw. Schaltknoten ermöglichen.

6. Verfahren nach einem der vorhergehenden Ansprüche,
**dadurch gekennzeichnet,**
**dass** bei Vermittlung der Routeninformation aus dem ersten Schaltknoten (SN1) als Quelle bis zum zweiten Schaltknoten (SN2) als Endziel die Registrierdaten eine erste Route (R1) enthalten,
**dass** die Route (R1) als Tabelle aller Verbindungsabschnitte mit den entsprechenden angeschlossenen Netzknoten eines ersten Pfades gespeichert wird,
**dass** dem zweiten Schaltknoten (SN1) die Routeninformation aus dem zweiten Schaltknoten (SN2) zugeführt wird,
**dass** bei weiterer Vermittlung der Routeninformation aus dem ersten Schaltknoten (SN1) als Quelle bis zu dem zweiten Schaltknoten (SN2) als Endziel die Registrierdaten eine weitere Route (R2) enthalten, die eine Übertragung der Routeninformation gemäß der ersten gespeicherten Route (R1) ausschliesst.

7. Verfahren nach einem der vorhergehenden Ansprüche,
**dadurch gekennzeichnet,**
**dass** zur Auswahl eines einzelnen Netzknoten zur Weiterübertragung der Routeninformation aus einem anderen Netzknoten bei einer Suche eines disjunkten Pfades zwischen den Schalknoten (SN1, SN2) eine Optimierungsmethode eines kürzesten Übertragungsweges verwendet wird.

8. Verfahren nach einem der vorhergehenden Ansprüche,
**dadurch gekennzeichnet,**
**dass** nach Ermittlung mindestens zweier disjunkten Pfade und bei Abwesenheit einer entlang einem Pfad hin- oder rückläufigen Routeninformation die Schaltknoten (SN1, SN2) die Signalübertragung auf einem weiteren disjunkten ermittelten Pfad schalten werden.

9. Verfahren nach einem der vorhergehenden Ansprüche,
**dadurch gekennzeichnet,**
**dass** bei Erweiterung des Netzwerks mittels weiterer Netz- bzw. Schaltknoten (SN0, SN3) die Registrierdaten in der Routeninformation mit neuen Quell- und Endknoten aktualisiert werden.

10. Verfahren nach einem der vorhergehenden Ansprüche,
**dadurch gekennzeichnet,**
**dass** bei der Suche eines disjunkten Pfades die Netzknoten (N1, N2, N3, ...) und/oder die Schaltknoten (SN1, SN2) geschaltet werden und
**dass** nach Kenntnis des disjunkten Pfades lediglich die Schaltknoten (SN1, SN2) geschaltet werden.
